# EUROPEAN PATENT APPLICATION

(11) **EP 4 664 967 A1**
(43) Date of publication of application: **17.12.2025**
(21) Application number: 23920475.3
(22) Date of filing: 09.02.2023
(51) Int. Cl.: H04W 24/02

(54) **OPERATION DETERMINATION METHOD AND DEVICE, OPERATION INDICATION METHOD AND DEVICE, COMMUNICATION DEVICE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2023/075281
(87) International publication number: WO 2024/164267

(57) **Abstract**

The present disclosure relates to the technical field of communications, and specifically relates to an operation determination method and device, an operation indication method and device, a communication device, and a storage medium. The operation determination method comprises: recording information of a first non-public network into a report variable, wherein the information of the first non-public network is used for determining whether to execute a first operation. According to the present disclosure, a terminal can record information of a first non-public network into a report variable. The information of the first non-public network is used for determining whether to execute a first operation; therefore, the terminal can determine, according to the information of the first non-public network, whether to execute the first operation. Therefore, it is ensured that in a scenario in which a non-public network is introduced, the terminal can accurately determine, according to the information of the first non-public network, whether to execute the first operation.

## Description

### FIELD

The present disclosure relates to the field of communication technologies, and specifically relates to an operation determination method, an operation instruction method, an operation determination apparatus, an operation instruction apparatus, an operation determination system, a communication apparatus, and a computer-readable storage medium.

### BACKGROUND

A terminal may first determine whether a specific condition is met when performing an operation. The operation is performed when the specific condition is met. Otherwise, the operation will not be performed. However, with the development of communication technologies, it is difficult to meet demands by making a judgment based on a certain condition.

### SUMMARY

Embodiments of the present disclosure provide an operation determination method, an operation instruction method, an operation determination apparatus, an operation instruction apparatus, an operation determination system, a communication apparatus, and a computer-readable storage medium, so as to solve a technical problem in the related art.

According to a first aspect of embodiments of the present disclosure, an operation determination method is provided, which is performed by a terminal. The operation determination method includes recording information of a first non-public network into a report variable of a report, in which the information of the first non-public network is configured to determine whether to perform a first operation.

According to a second aspect of embodiments of the present disclosure, an operation instruction method is provided, which is performed by a network device. The operation instruction method includes instructing a terminal to determine or not to determine whether to perform a first operation according to information of a first non-public network recorded in a report variable of a report.

According to a third aspect of embodiments of the present disclosure, an operation determination apparatus is provided. The operation determination apparatus includes a recording module configured to record information of a first non-public network into a report variable of a report, in which the information of the first non-public network is configured to determine whether to perform a first operation.

According to a fourth aspect of embodiments of the present disclosure, an operation instruction apparatus is provided. The operation instruction apparatus includes an instruction module configured to instruct a terminal to determine or not to determine whether to perform a first operation according to information of a first non-public network recorded in a report variable of a report.

According to a fifth aspect of embodiments of the present disclosure, an operation determination system is provided. The operation determination system includes a terminal and a network device, in which the terminal is configured to implement the operation determination method described above, and the network device is configured to implement the operation instruction method described above.

According to a sixth aspect of embodiments of the present disclosure, a communication apparatus is provided. The communication apparatus includes: a processor; and a memory configured to store a computer program, in which when the computer program is executed by the processor, the operation determination method described above is implemented.

According to a seventh aspect of embodiments of the present disclosure, a communication apparatus is provided. The communication apparatus includes: a processor; and a memory configured to store a computer program, in which when the computer program is executed by the processor, the operation instruction method described above is implemented.

According to an eighth aspect of embodiments of the present disclosure, a computer-readable storage medium is provided, for storing a computer program, and when the computer program is executed by a processor, the operation determination method described above is implemented.

According to a ninth aspect of embodiments of the present disclosure, a computer-readable storage medium is provided, for storing a computer program, and when the computer program is executed by a processor, the operation instruction method described above is implemented.

According to embodiments of the present disclosure, the terminal may record the information of the first non-public network into the report variable of the report. Since the information of the first non-public network is configured to determine whether to perform the first operation, the terminal may determine whether to perform the first operation according to the information of the first non-public network. Therefore, it is ensured that in a scenario in which the non-public network is introduced, the terminal may accurately determine whether to perform the first operation according to the information of the first non-public network.

### BRIEF DESCRIPTION OF THE DRAWINGS

In order to more clearly explain the technical solution of embodiments of the present disclosure, the accompanying drawings required to be used in the description of the embodiments will be briefly described below, and it is obvious for those skilled in the art that the accompanying drawings described below are only some embodiments of the present disclosure, other accompanying drawings may be obtained according to these accompanying drawings without creative labor.
FIG. 1 is a schematic flowchart illustrating an operation determination method according to an embodiment of the present disclosure.
FIG. 2 is a schematic flowchart illustrating another operation determination method according to an embodiment of the present disclosure.
FIG. 3 is a schematic flowchart illustrating yet another operation determination method according to an embodiment of the present disclosure.
FIG. 4 is a schematic flowchart illustrating an operation instruction method according to embodiments of the present disclosure.
FIG. 5 is a schematic flowchart illustrating another operation instruction method according to an embodiment of the present disclosure.
FIG. 6 is a schematic flowchart illustrating yet another operation instruction method according to an embodiment of the present disclosure.
FIG. 7 is a schematic diagram illustrating an interaction between a terminal and a network device according to embodiments of the present disclosure.
FIG. 8 is a schematic block diagram illustrating an operation determination apparatus according to an embodiment of the present disclosure.
FIG. 9 is a schematic block diagram illustrating an operation instruction apparatus according to an embodiment of the present disclosure.
FIG. 10 is a schematic block diagram illustrating an apparatus for operation instruction according to an embodiment of the present disclosure.
FIG. 11 is a schematic block diagram illustrating an apparatus for operation determination according to an embodiment of the present disclosure.

### DETAILED DESCRIPTION

The technical solution in embodiments of the present disclosure will be described clearly and completely in combination with the accompanying drawings in embodiments of the present disclosure. Obviously, the embodiments described are only part of the embodiments of the present disclosure, rather than all embodiments. Based on the embodiments in the present disclosure, all other embodiments obtained by those skilled in the art without creative work fall within the protection scope of the present disclosure.

Terms used in the embodiments of the present disclosure are solely for the purpose of describing specific embodiments, and are not intended to limit the embodiments of the present disclosure. The singular forms of "a", "an", and "the" used in the embodiments of the present disclosure and the appended claims are also intended to include the plural form, unless the context clearly indicates other meanings. It should also be understood that the term "and/or" used herein refers to and includes any or all possible combinations of one or more associated listed items.

It should be understood that, although terms such as "first", "second" and "third" may be used in the embodiments of the present disclosure to describe various types of information, such information shall not be limited by these terms. These terms are only used to distinguish the same type of information. For example, without departing from the scope of the embodiments of the present disclosure, first information may also be referred to as second information, and similarly, second information may also be referred to as first information. Depending on the context, the term "if" as used herein may be interpreted as "when," or "while" or "in response to determining".

For the purpose of simplicity and ease of understanding, terms such as "greater than" or "less than", "higher than" or "lower than" are used herein to describe the magnitude relationship. However, for those skilled in the art, it may be understood that the term "greater than" may also encompass "greater than or equal to", and the term "less than" may also encompass "less than or equal to". Similarly, the term "higher than" may also encompass "higher than or equal to", and the term "lower than" may also encompass "lower than or equal to".

In an embodiment, when a terminal needs to perform a certain operation, it may determine whether an identifier (ID) of a public land mobile network (PLMN) where the terminal is located belongs to an identifier list. In response to determining that the ID of the PLMN where the terminal is located belongs to the identifier list, the terminal may perform this operation; and in response to determining the ID of the PLMN where the terminal is located does not belong to the identifier list, the terminal does not perform this operation.

The identifier list may store an ID of an equivalent PLMN (which may be referred to as EPLMN) equivalent to a registered PLMN (which may be referred to as RPLMN). In a case that the ID of the PLMN where the terminal is located belongs to the identifier list, the PLMN where the terminal is located is the EPLMN equivalent to the RPLMN, and the terminal may determine that the condition is met and then perform this operation.

With the development of communication technologies, a non-public network (NPN) is introduced, and further, an equivalent non-public network is introduced on the basis of the non-public network. Therefore, it is necessary for the terminal to take the non-public network into account in a case of performing certain operations.

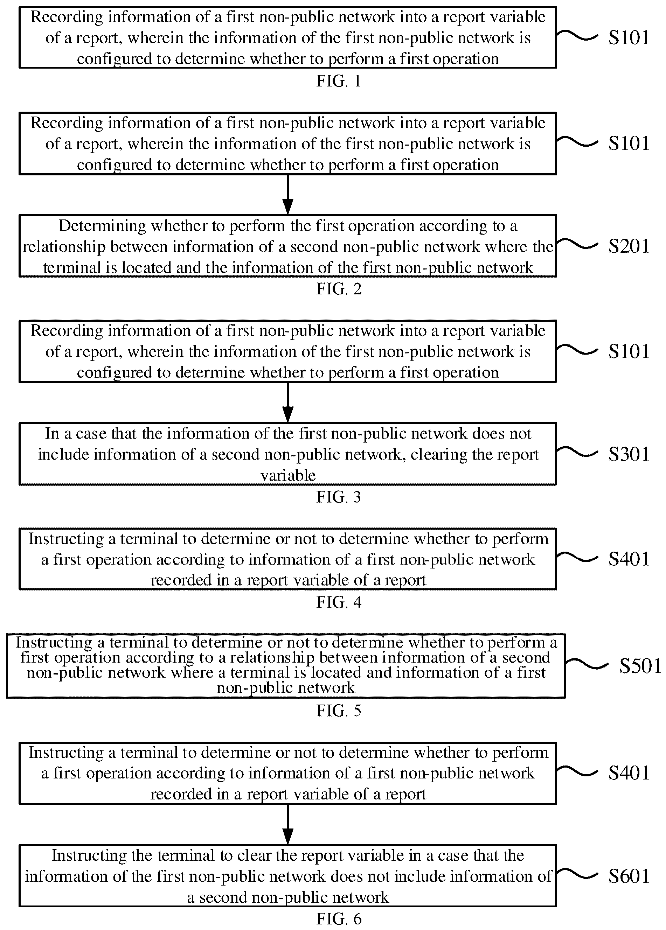

FIG. 1 is a schematic flowchart illustrating an operation determination method according to an embodiment of the present disclosure. The operation determination method shown in this embodiment may be performed by a terminal. The terminal includes, but is not limited to, communication devices such as a mobile phone, a tablet, a wearable device, a sensor, and internet of things (IoT) equipment. The terminal may communicate with a network device. The network device includes, but is not limited to, network devices in communication systems such as 4G, 5G, and/or 6G mobile communication systems, for example, a base station, a core network, etc.

As shown in FIG. 1, the operation determination method may include the following steps.

In step S101, information of a first non-public network is recorded into a report variable of a report, in which the information of the first non-public network is configured to determine whether to perform a first operation.

According to embodiments of the present disclosure, the terminal may record the information of the first non-public network into the report variable of the report. Since the information of the first non-public network is configured to determine whether to perform the first operation, the terminal may determine whether to perform the first operation according to the information of the first non-public network. Therefore, it is ensured that in a scenario in which the non-public network is introduced, the terminal may accurately determine whether to perform the first operation according to the information of the first non-public network.

It should be noted that it may be specified by protocols or instructed by a network device that the terminal determines whether to perform the first operation according to the information of the first non-public network.

For example, in a case that the network device instructs the terminal to determine whether to perform the first operation according to the information of the first non-public network, the terminal may determine whether to perform the first operation according to the information of the first non-public network. For example, in a case that the network device instructs the terminal not to determine whether to perform the first operation according to the information of the first non-public network, the terminal does not determine whether to perform the first operation according to the information of the first non-public network.

In an embodiment, the first operation includes a self-organizing network (SON) operation and/or a minimization of drive tests (MDT) operation.

In an embodiment, the first operation includes at least one of:
measurement, such as SON measurement and/or MDT measurement;
recording a measurement result, such as a SON measurement result and/or a MDT measurement result;
sending a measurement result availability indication to the network device, for example, sending a SON measurement result availability indication and/or a MDT measurement result availability indication to the network device;
sending a measurement configuration availability indication to the network device, for example, sending a SON measurement configuration availability indication and/or a MDT measurement configuration availability indication to the network device; and
sending a measurement result to the network device, for example, sending a SON measurement result and/or a MDT measurement result to the network device.

In an embodiment, the first operation may include the SON measurement and/or the MDT measurement. The terminal may perform the SON measurement and/or the MDT measurement in a case of determining to perform the first operation according to the information of the first non-public network; and the terminal may not perform the SON measurement and/or the MDT measurement in a case of determining not to perform the first operation according to the information of the first non-public network.

In an embodiment, the first operation may include recording the SON measurement result and/or the MDT measurement result. The terminal may record the SON measurement result and/or the MDT measurement result in a case of determining to perform the first operation according to the information of the first non-public network; and the terminal may not record the SON measurement result and/or the MDT measurement result in a case of determining not to perform the first operation according to the information of the first non-public network.

In an embodiment, the first operation may include sending the SON measurement result availability indication and/or the MDT measurement result availability indication to the network device. The terminal may send the SON measurement result availability indication and/or the MDT measurement result availability indication to the network device in a case of determining to perform the first operation according to the information of the first non-public network; and the terminal may not send the SON measurement result availability indication and/or the MDT measurement result availability indication to the network device in a case of determining not to perform the first operation according to the information of the first non-public network.

In an embodiment, the first operation may include sending the SON measurement configuration availability indication and/or the MDT measurement configuration availability indication to the network device. The terminal may send the SON measurement configuration availability indication and/or the MDT measurement configuration availability indication to the network device in a case of determining to perform the first operation according to the information of the first non-public network; and the terminal may not send the SON measurement configuration availability indication and/or the MDT measurement configuration availability indication to the network device in a case of determining not to perform the first operation according to the information of the first non-public network.

In an embodiment, the first operation may include sending the SON measurement result and/or the MDT measurement result to the network device. The terminal may send the SON measurement result and/or the MDT measurement result to the network device in a case of determining to perform the first operation according to the information of the first non-public network; and the terminal may not send the SON measurement result and/or the MDT measurement result to the network device in a case of determining not to perform the first operation according to the information of the first non-public network.

In an embodiment, the report includes at least one of:
a radio link failure (RLF) report;
a successful handover report (SuccessHO-Report, SHR);
a random access (RA) report;
a connection establishment failure (CEF) report; and
a minimization of drive tests report (MDT report).

In an embodiment, the terminal may record the information of the first non-public network into a report variable of the radio link failure report, e.g., a VarRLF-Report.

In an embodiment, the terminal may record the information of the first non-public network into a report variable of the successful handover report, e.g., a VarSuccessHO-Report.

In an embodiment, the terminal may record the information of the first non-public network into a report variable of the random access report, e.g., a VarRA-Report.

In an embodiment, the terminal may record the information of the first non-public network into a report variable of the connection establishment failure report, e.g., a VarConnEstFailReport.

In an embodiment, the terminal may record the information of the first non-public network into a report variable of the minimization of drive tests report, e.g., a VarLogMeasReport.

In an embodiment, the first non-public network includes at least one of:
a stand-alone non-public network (SNPN); and
a public network integrated non-public network (public network integrated NPN, PNI-NPN).

In an embodiment, the information of the first non-public network includes at least one of:
an identifier of the SNPN;
an identifier of the PNI-NPN;
a network identifier (NID); and
a closed access group (CAG) identifier.

For example, in a case that the first non-public network is the SNPN, the information of the first non-public network includes the NID, and this NID is associated with an existing PLMN identifier (ID) to jointly identify the SNPN. Alternatively, the information of the first non-public network includes the PLMN ID and the NID.

For example, in a case that the first non-public network is the PNI-NPN, the information of the first non-public network includes the CAG identifier, and this CAG identifier is associated with an existing PLMN identifier (ID) to jointly identify the PNI-NPN. Alternatively, the information of the first non-public network includes the PLMN ID and the CAG identifier.

In an embodiment, the first non-public network includes at least one of:
a selected non-public network (Selected NPN) of the terminal in a case that the recording of the report is triggered;
a registered non-public network (Registered NPN) of the terminal in a case that the recording of the report is triggered; and
at least one non-public network (Equivalent NPN) of the terminal equivalent to a registered non-public network of the terminal in a case that the recording of the report is triggered.

In an embodiment, in a case that the first non-public network is the SNPN, the first non-public network may include a SNPN of the terminal in a case that the recording of the report is triggered and/or at least one SNPN equivalent to the SNPN of the terminal in a case that the recording of the report is triggered.

In an embodiment, a non-public network of the terminal may include a non-public network on which the terminal is camped.

In an embodiment, the terminal may record information of the selected non-public network into the report variable in a case that the recording of the report is triggered, in which the information of the selected non-public network is configured to determine whether to perform the first operation. For example, the terminal may determine whether to perform the first operation according to the information of the selected non-public network.

In an embodiment, the terminal may record information of the registered non-public network and/or information of at least one non-public network equivalent to the registered non-public network into the report variable in a case that the recording of the report is triggered, in which the information of the registered non-public network and/or the information of the at least one non-public network equivalent to the registered non-public network is configured to determine whether to perform the first operation. For example, the terminal may determine whether to perform the first operation according to the information of the registered non-public network and/or the information of the at least one non-public network equivalent to the registered non-public network.

In an embodiment, in a case that the recording of the report is triggered, and the terminal has stored the information of the registered non-public network and/or the information of the at least one non-public network equivalent to the registered non-public network, the terminal may record the information of the registered non-public network and/or the information of the at least one non-public network equivalent to the registered non-public network into the report variable, in which the information of the registered non-public network and/or the information of the at least one non-public network equivalent to the registered non-public network is configured to determine whether to perform the first operation.

In a case that the terminal has not stored the information of the registered non-public network and/or the information of the at least one non-public network equivalent to the registered non-public network, the terminal may record the information of the selected non-public network into the report variable, in which the information of the selected non-public network is configured to determine whether to perform the first operation. For example, the terminal may determine whether to perform the first operation according to the information of the selected non-public network.

In an embodiment, the information of the registered non-public network and/or the information of the at least one non-public network equivalent to the registered non-public network is determined based on a non access stratum (NAS) signaling.

In an embodiment, after obtaining the information of the registered non-public network and/or the information of the at least one non-public network equivalent to the registered non-public network from the NAS signaling, the terminal may store the information of the registered non-public network and/or the information of the at least one non-public network equivalent to the registered non-public network.

In an embodiment, in a case that the terminal registers with a non-public network, an access and mobility management function (AMF) in the core network may indicate to the terminal a non-public network equivalent to the non-public network with which the terminal registers, for example, by communicating with the terminal via the non access stratum signaling. After receiving the non access stratum signaling, the terminal may determine the information of the registered non-public network and/or the information of the at least one non-public network equivalent to the registered non-public network according to the non access stratum signaling.

FIG. 2 is a schematic flowchart illustrating another operation determination method according to an embodiment of the present disclosure. This method may be performed by the terminal. As shown in FIG. 2, the operation determination method further includes the following steps.

In step S201, it is determined whether to perform a first operation according to a relationship between information of a second non-public network where the terminal is located and information of a first non-public network.

It should be noted that the embodiment shown in FIG. 2 may be implemented independently or in combination with at least one other embodiment of the present disclosure, depending on the specific requirements, which is not limited in the present disclosure.

In an embodiment, in a case of determining whether to perform the first operation, the terminal may determine the information of the second non-public network where the terminal is located, and then determine whether to perform the first operation according to the relationship between the information of the second non-public network and the information of the first non-public network.

In an embodiment, the second non-public network is a non-public network where the terminal is located in a case of determining whether to perform the first operation. For example, the second non-public network is a registered non-public network where the terminal is located in a case of determining whether to perform the first operation.

In an embodiment, determining whether to perform the first operation according to the relationship between the information of the second non-public network where the terminal is located and the information of the first non-public network includes at least one of:
in a case that the information of the first non-public network includes the information of the second non-public network, determining to perform the first operation; or
in a case that the information of the first non-public network does not include the information of the second non-public network, determining not to perform the first operation.

In an embodiment, in a case of determining whether to perform the first operation, the terminal may determine the information of the second non-public network where the terminal is located, and then determine whether the information of the first non-public network includes the information of the second non-public network. In response to determining that the information of the first non-public network includes the information of the second non-public network, the terminal may perform the first operation. In response to determining that the information of the first non-public network does not include the information of the second non-public network, the terminal does not perform the first operation.

In an embodiment, the information of the first non-public network including the information of the second non-public network, for example, may mean that the information of the first non-public network is the same as the information of the second non-public network. In this case, the terminal performs the first operation in response to that the information of the second non-public network is the same as the information of the first non-public network.

In an embodiment, the information of the first non-public network including the information of the second non-public network, for example, may mean that part of the information of the first non-public network is the same as the information of the second non-public network. In this case, the terminal performs the first operation in response to that the information of the second non-public network is included in the information of the first non-public network.

In an embodiment, the information of the first non-public network may be recorded in a report variable in a form of a list or in other forms.

For example, the list recording the information of the first non-public network includes a registered non-public network of the terminal and at least one non-public network equivalent to the registered non-public network in a case that the recording of the report is triggered. In a case of determining whether to perform the first operation, the terminal may determine the information of the second non-public network where the terminal is located, and then determine whether the list storing the information of the first non-public network includes the information of the second non-public network.

In a case that the list storing the information of the first non-public network includes the information of the second non-public network, that is, the second non-public network is the registered non-public network of the terminal or the at least one non-public network equivalent to the registered non-public network in a case that the recording of the report is triggered, the terminal may perform the first operation.

In a case that the list storing the information of the first non-public network does not include the information of the second non-public network, that is, the second non-public network is not the registered non-public network of the terminal or the at least one non-public network equivalent to the registered non-public network in a case that the recording of the report is triggered, the terminal does not perform the first operation.

FIG. 3 is a schematic flowchart illustrating yet another operation determination method according to an embodiment of the present disclosure. This method may be performed by the terminal. As shown in FIG. 3, the operation determination method further includes the following step.

In step S301, in a case that information of a first non-public network does not include information of a second non-public network, a report variable is cleared.

It should be noted that the embodiment shown in FIG. 3 may be implemented independently or in combination with at least one other embodiment of the present disclosure, depending on the specific requirements, which is not limited in the present disclosure.

In an embodiment, since the terminal is currently in the second non-public network, in a case that the terminal determines that the information of the first non-public network does not include the information of the second non-public network, the information of the first non-public network has little significance to the terminal and may be deleted. Therefore, in a case that the information of the first non-public network does not include the information of the second non-public network, the terminal may clear the report variable, thereby deleting the information of the first non-public network recorded in the report variable, so as to save storage space.

FIG. 4 is a schematic flowchart illustrating an operation instruction method according to an embodiment of the present disclosure. The operation instruction method shown in this embodiment may be performed by a network device. The network device may communicate with the terminal. The network device includes, but is not limited to, a base station in a communication system, such as a 4G base station, a 5G base station, and a 6G base station. The terminal includes, but is not limited to, a communication device such as a mobile phone, a tablet, a wearable device, a sensor, and IoT equipment.

As shown in FIG. 4, the operation instruction method may include the following steps.

In step S401, the terminal is instructed to determine or not to determine whether to perform a first operation according to information of a first non-public network recorded in a report variable of a report.

According to an embodiment of the present disclosure, the network device may instruct the terminal to determine or not to determine whether to perform the first operation according to the information of the first non-public network recorded in the report variable. Correspondingly, the terminal may record the information of the first non-public network into the report variable of the report, and determine whether to perform the first operation according to the information of the first non-public network. Therefore, it is ensured that in a scenario in which the non-public network is introduced, the terminal may accurately determine whether to perform the first operation according to the information of the first non-public network.

It should be noted that it may be specified by protocols or instructed by the network device shown in the embodiment of FIG. 4 that the terminal determines whether to perform the first operation according to the information of the first non-public network.

In an embodiment, the first operation includes a self-organizing network (SON) operation and/or a minimization of drive tests (MDT) operation.

In an embodiment, the first operation includes at least one of:
measurement, such as SON measurement and/or MDT measurement;
recording a measurement result, such as a SON measurement result and/or a MDT measurement result;
sending a measurement result availability indication to the network device, for example, sending a SON measurement result availability indication and/or a MDT measurement result availability indication to the network device;
sending a measurement configuration availability indication to the network device, for example, sending a SON measurement configuration availability indication and/or a MDT measurement configuration availability indication to the network device; and
sending a measurement result to the network device, for example, sending a SON measurement result and/or a MDT measurement result to the network device.

In an embodiment, the first operation may include the SON measurement and/or the MDT measurement. The network device may instruct the terminal to determine or not to determine whether to perform the SON measurement and/or the MDT measurement according to the information of the first non-public network.

The terminal may perform the SON measurement and/or the MDT measurement in a case of determining to perform the first operation according to the information of the first non-public network; and the terminal may not perform the SON measurement and/or the MDT measurement in a case of determining not to perform the first operation according to the information of the first non-public network.

In an embodiment, the first operation may include recording the SON measurement result and/or the MDT measurement result. The network device may instruct the terminal to determine or not to determine whether to record the SON measurement result and/or the MDT measurement result according to the information of the first non-public network.

The terminal may record the SON measurement result and/or the MDT measurement result in a case of determining to perform the first operation according to the information of the first non-public network; and the terminal may not record the SON measurement result and/or the MDT measurement result in a case of determining not to perform the first operation according to the information of the first non-public network.

In an embodiment, the first operation may include sending the SON measurement result availability indication and/or the MDT measurement result availability indication to the network device. The network device may instruct the terminal to determine or not to determine whether to send the SON measurement result availability indication and/or the MDT measurement result availability indication to the network device according to the information of the first non-public network.

The terminal may send the SON measurement result availability indication and/or the MDT measurement result availability indication to the network device in a case of determining to perform the first operation according to the information of the first non-public network; and the terminal may not send the SON measurement result availability indication and/or the MDT measurement result availability indication to the network device in a case of determining not to perform the first operation according to the information of the first non-public network.

In an embodiment, the first operation may include sending the SON measurement configuration availability indication and/or the MDT measurement configuration availability indication to the network device. The network device may instruct the terminal to determine or not to determine whether to send the SON measurement configuration availability indication and/or the MDT measurement configuration availability indication to the network device according to the information of the first non-public network.

The terminal may send the SON measurement configuration availability indication and/or the MDT measurement configuration availability indication to the network device in a case of determining to perform the first operation according to the information of the first non-public network; and the terminal may not send the SON measurement configuration availability indication and/or the MDT measurement configuration availability indication to the network device in a case of determining not to perform the first operation according to the information of the first non-public network.

In an embodiment, the first operation may include sending the SON measurement result and/or the MDT measurement result to the network device. The network device may instruct the terminal to determine or not to determine whether to send the SON measurement result and/or the MDT measurement result to the network device according to the information of the first non-public network.

The terminal may send the SON measurement result and/or the MDT measurement result to the network device in a case of determining to perform the first operation according to the information of the first non-public network; and the terminal may not send the SON measurement result and/or the MDT measurement result to the network device in a case of determining not to perform the first operation according to the information of the first non-public network.

In an embodiment, the report includes at least one of:
a radio link failure report (RLF report);
a successful handover report (SuccessHO-Report, SHR);
a random access report (RA report);
a connection establishment failure report (CEF report); and
a minimization of drive tests report (MDT report).

In an embodiment, the terminal may record the information of the first non-public network into a report variable of the radio link failure report, e.g., a VarRLF-Report.

In an embodiment, the terminal may record the information of the first non-public network into a report variable of the successful handover report, e.g., a VarSuccessHO-Report.

In an embodiment, the terminal may record the information of the first non-public network into a report variable of the random access report, e.g., a VarRA-Report.

In an embodiment, the terminal may record the information of the first non-public network into a report variable of the connection establishment failure report, e.g., a VarConnEstFailReport.

In an embodiment, the terminal may record the information of the first non-public network into a report variable of the minimization of drive tests report, e.g., a VarLogMeasReport.

In an embodiment, the first non-public network includes at least one of:
a stand-alone non-public network (SNPN); and
a public network integrated non-public network (PNI-NPN).

In an embodiment, the information of the first non-public network includes at least one of:
an identifier of the SNPN;
an identifier of the PNI-NPN;
a network identifier (NID); and
a closed access group (CAG) identifier.

For example, in a case that the first non-public network is the SNPN, the information of the first non-public network includes the NID, and this NID is associated with an existing PLMN identifier (ID) to jointly identify the SNPN. Alternatively, the information of the first non-public network includes the PLMN ID and the NID.

For example, in a case that the first non-public network is the PNI-NPN, the information of the first non-public network includes the CAG identifier, and this CAG identifier is associated with an existing PLMN identifier (ID) to jointly identify the PNI-NPN. Alternatively, the information of the first non-public network includes the PLMN ID and the CAG identifier.

In an embodiment, the first non-public network includes at least one of:
a selected non-public network (Selected NPN) of the terminal in a case that the recording of the report is triggered;
a registered non-public network (Registered NPN) of the terminal in a case that the recording of the report is triggered; and
at least one non-public network (Equivalent NPN) of the terminal equivalent to a registered non-public network of the terminal in a case that the recording of the report is triggered.

In an embodiment, in a case that the non-public network is the SNPN, the first non-public network may include an SNPN of the terminal in a case that the recording of the report is triggered and/or at least one SNPN equivalent to the SNPN of the terminal in a case that the recording of the report is triggered.

In an embodiment, a non-public network where the terminal is located may refer to a non-public network on which the terminal is camped.

In an embodiment, the network device may instruct the terminal to determine or not to determine whether to perform the first operation according to information of the selected non-public network. The terminal may record the information of the selected non-public network into the report variable in a case that the recording of the report is triggered, in which the information of the selected non-public network is configured to determine whether to perform the first operation. For example, the terminal may determine whether to perform the first operation according to the information of the selected non-public network.

In an embodiment, the network device may instruct the terminal to determine or not to determine whether to perform the first operation according to information of the registered non-public network and/or information of the at least one non-public network equivalent to the registered non-public network. The terminal may record the information of the registered non-public network and/or the information of the at least one non-public network equivalent to the registered non-public network into the report variable in a case that the recording of the report is triggered, in which the information of the registered non-public network and/or the information of the at least one non-public network equivalent to the registered non-public network is configured to determine whether to perform the first operation. For example, the terminal may determine whether to perform the first operation according to the information of the registered non-public network and/or the information of the at least one non-public network equivalent to the registered non-public network.

In an embodiment, in a case that the recording of the report is triggered, and the terminal has stored the information of the registered non-public network and/or the information of the at least one non-public network equivalent to the registered non-public network, the terminal may record the information of the registered non-public network and/or the information of the at least one non-public network equivalent to the registered non-public network into the report variable, in which the information of the registered non-public network and/or the information of the at least one non-public network equivalent to the registered non-public network is configured to determine whether to perform the first operation.

In a case that the terminal has not stored the information of the registered non-public network and/or the information of the at least one non-public network equivalent to the registered non-public network, the terminal may record the information of the selected non-public network into the report variable, in which the information of the selected non-public network is configured to determine whether to perform the first operation. For example, the terminal may determine whether to perform the first operation according to the information of the selected non-public network.

In an embodiment, the information of the registered non-public network and/or the information of the at least one non-public network equivalent to the registered non-public network is determined based on communication with a core network.

In an embodiment, in a case that the terminal registers with a non-public network, an access and mobility management function (AMF) in the core network may indicate to the terminal a non-public network equivalent to the non-public network with which the terminal registers, for example, by communicating with the terminal via a non access stratum signaling. After receiving the non access stratum signaling, the terminal may determine the information of the registered non-public network and/or the information of the at least one non-public network equivalent to the registered non-public network according to the non access stratum signaling.

The core network may also send the information of the registered non-public network and/or the information of the at least one non-public network equivalent to the registered non-public network to the network device. Thus, the network device may determine the information of the registered non-public network and/or the information of the at least one non-public network equivalent to the registered non-public network based on communication with the core network.

In an embodiment, after obtaining the information of the registered non-public network and/or the information of the at least one non-public network equivalent to the registered non-public network from the non access stratum signaling, the terminal may store the information of the registered non-public network and/or the information of the at least one non-public network equivalent to the registered non-public network.

FIG. 5 is a schematic flowchart illustrating another operation instruction method according to an embodiment of the present disclosure. This method may be performed by a network device. As shown in FIG. 5, instructing a terminal to determine or not to determine whether to perform a first operation according to information of a first non-public network recorded in a report variable of a report includes the following step.

In step S501, the terminal is instructed to determine or not to determine whether to perform the first operation according to a relationship between information of a second non-public network where the terminal is located and the information of the first non-public network.

It should be noted that the embodiment shown in FIG. 5 may be implemented independently or in combination with at least one other embodiment of the present disclosure, depending on the specific requirements, which is not limited in the present disclosure.

In an embodiment, the network device may instruct the terminal to determine or not to determine whether to perform the first operation according to the relationship between the information of the second non-public network where the terminal is located and the information of the first non-public network.

In a case of determining whether to perform the first operation, the terminal may determine the information of the second non-public network where the terminal is located, and then determine whether to perform the first operation according to the relationship between the information of the second non-public network and the information of the first non-public network.

In an embodiment, the second non-public network is a non-public network where the terminal is located in a case of determining whether to perform the first operation. For example, the second non-public network is a registered non-public network where the terminal is located in a case of determining whether to perform the first operation.

In an embodiment, instructing the terminal to determine or not to determine whether to perform the first operation according to the relationship between the information of the second non-public network where the terminal is located and the information of the first non-public network includes at least one of:
instructing the terminal to perform the first operation in a case that the information of the first non-public network includes the information of the second non-public network; or
instructing the terminal not to perform the first operation in a case that the information of the first non-public network does not include the information of the second non-public network.

In an embodiment, the network device may instruct the terminal to perform the first operation in a case that the information of the first non-public network includes the information of the second non-public network; and the network device may instruct the terminal not to perform the first operation in a case that the information of the first non-public network does not include the information of the second non-public network.

In a case of determining whether to perform the first operation, the terminal may determine the information of the second non-public network where the terminal is located, and then determine whether the information of the first non-public network includes the information of the second non-public network. In response to determining that the information of the first non-public network includes the information of the second non-public network, the terminal may perform the first operation. In response to determining that the information of the first non-public network does not include the information of the second non-public network, the terminal does not perform the first operation.

In an embodiment, the information of the first non-public network including the information of the second non-public network, for example, may mean that the information of the first non-public network is the same as the information of the second non-public network. In this case, the terminal performs the first operation in response to that the information of the second non-public network is the same as the information of the first non-public network.

In an embodiment, the information of the first non-public network including the information of the second non-public network, for example, may mean that part of the information of the first non-public network is the same as the information of the second non-public network. In this case, the terminal performs the first operation in response to that the information of the second non-public network is included in the information of the first non-public network.

In an embodiment, the information of the first non-public network may be recorded in a report variable in a form of a list or in other forms.

For example, the list recording the information of the first non-public network includes a registered non-public network of the terminal and at least one non-public network equivalent to the registered non-public network in a case that the recording of the report is triggered. In a case of determining whether to perform the first operation, the terminal may determine the information of the second non-public network where the terminal is located, and then determine whether the list storing the information of the first non-public network includes the information of the second non-public network.

In a case that the list storing the information of the first non-public network includes the information of the second non-public network, that is, the second non-public network is the registered non-public network of the terminal or the at least one non-public network equivalent to the registered non-public network in a case that the recording of the report is triggered, the terminal may perform the first operation.

In a case that the list storing the information of the first non-public network does not include the information of the second non-public network, that is, the second non-public network is not the registered non-public network of the terminal or the at least one non-public network equivalent to the registered non-public network in a case that the recording of the report is triggered, the terminal does not perform the first operation.

FIG. 6 is a schematic flowchart illustrating yet another operation instruction method according to an embodiment of the present disclosure. This method may be performed by a network device. As shown in FIG. 6, the operation instruction method further includes the following step.

In step S601, a terminal is instructed to clear a report variable in a case that information of a first non-public network does not include information of a second non-public network.

It should be noted that the embodiment shown in FIG. 6 may be implemented independently or in combination with at least one other embodiment of the present disclosure, depending on the specific requirements, which is not limited in the present disclosure.

In an embodiment, since the terminal is currently in the second non-public network, in a case that the terminal determines that the information of the first non-public network does not include the information of the second non-public network, the information of the first non-public network has little significance to the terminal and may be deleted. Therefore, the network device may instruct the terminal to clear the report variable in a case that the information of the first non-public network does not include the information of the second non-public network. In a case that the information of the first non-public network does not include the information of the second non-public network, the terminal may clear the report variable, thereby deleting the information of the first non-public network recorded in the report variable, so as to save storage space.

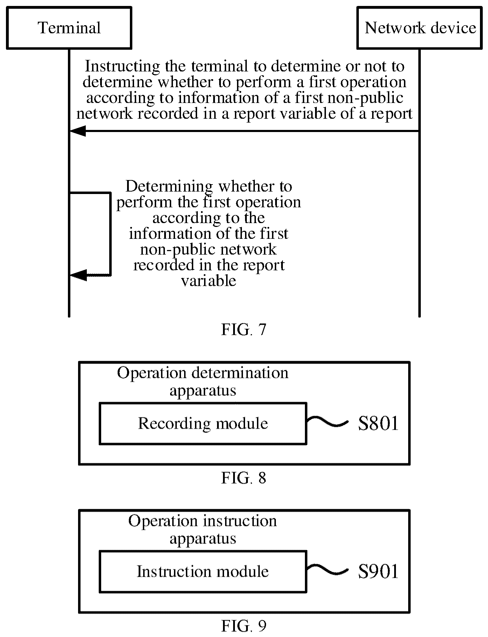

FIG. 7 is a schematic diagram illustrating an interaction between a terminal and a network device according to an embodiment of the present disclosure.

As shown in FIG. 7, the network device may instruct the terminal to determine or not to determine whether to perform a first operation according to information of a first non-public network recorded in a report variable of a report. In a case of determining that the network device instructs the terminal to determine whether to perform the first operation according to the information of the first non-public network recorded in the report variable, the terminal may determine whether to perform the first operation according to the information of the first non-public network recorded in the report variable.

In an embodiment, the first non-public network includes at least one of:
a selected non-public network of the terminal in a case that the recording of the report is triggered;
a registered non-public network of the terminal in a case that the recording of the report is triggered; and
at least one non-public network equivalent to a registered non-public network of the terminal in a case that the recording of the report is triggered.

In an embodiment, the network device may instruct the terminal to determine or not to determine whether to perform the first operation according to a relationship between information of a second non-public network where the terminal is located and the information of the first non-public network.

For example, the network device may instruct the terminal to perform the first operation in a case that the information of the first non-public network includes the information of the second non-public network; and the network device may instruct the terminal not to perform the first operation in a case that the information of the first non-public network does not include the information of the second non-public network.

In a case of determining that the network device instructs to the terminal determine whether to perform the first operation according to the relationship between the information of the second non-public network where the terminal is located and the information of the first non-public network, the terminal may determine whether to perform the first operation according to the relationship between the information of the second non-public network where the terminal is located and the information of the first non-public network.

For example, in a case that the information of the first non-public network includes the information of the second non-public network, the terminal determines to perform the first operation; and in a case that the information of the first non-public network does not include the information of the second non-public network, the terminal determines not to perform the first operation.

It should be noted that for other relevant contents in this embodiment reference may be made to the descriptions of relevant contents in the preceding embodiments and will not be repeated here.

Corresponding to the aforementioned embodiments of the operation determination method and the operation instruction method, the present disclosure also provides embodiments of an operation determination apparatus and an operation instruction apparatus.

FIG. 8 is a schematic block diagram illustrating an operation determination apparatus according to an embodiment of the present disclosure. As shown in FIG. 8, the operation determination apparatus includes:
a recording module 801 configured to record information of a first non-public network into a report variable of a report, in which the information of the first non-public network is configured to determine whether to perform a first operation.

In an embodiment, the first non-public network includes at least one of:
a selected non-public network of the terminal in a case that the recording of the report is triggered;
a registered non-public network of the terminal in a case that the recording of the report is triggered; and
at least one non-public network equivalent to a registered non-public network of the terminal in a case that the recording of the report is triggered.

In an embodiment, information of the registered non-public network and/or information of the at least one non-public network equivalent to the registered non-public network is determined based on communication with a core network.

In an embodiment, the apparatus further includes a processing module configured to determine whether to perform the first operation according to a relationship between information of a second non-public network where the terminal is located and the information of the first non-public network.

In an embodiment, the second non-public network is a non-public network where the terminal is located in a case of determining whether to perform the first operation.

In an embodiment, determining whether to perform the first operation according to the relationship between the information of the second non-public network where the terminal is located and the information of the first non-public network includes at least one of:
in a case that the information of the first non-public network includes the information of the second non-public network, determining to perform the first operation; or
in a case that the information of the first non-public network does not include the information of the second non-public network, determining not to perform the first operation.

In an embodiment, the apparatus further includes a processing module configured to clear the report variable in a case that the information of the first non-public network does not include the information of the second non-public network.

In an embodiment, the first operation includes a self-organizing network operation and/or a minimization of drive tests operation.

In an embodiment, the first operation includes at least one of: measurement; recording a measurement result; sending a measurement result availability indication to a network device; sending a measurement configuration availability indication to a network device; and sending a measurement result to a network device.

In an embodiment, the report includes at least one of: a radio link failure report; a successful handover report; a random access report; a connection establishment failure report; and a minimization of drive tests report.

In an embodiment, the first non-public network includes at least one of: a stand-alone non-public network; and a public network integrated non-public network.

In an embodiment, the information of the first non-public network includes at least one of: an identifier of the stand-alone non-public network; an identifier of the public network integrated non-public network; a network identifier; and a closed access group identifier.

FIG. 9 is a schematic block diagram illustrating an operation instruction apparatus according to an embodiment of the present disclosure. As shown in FIG. 9, the operation instruction apparatus includes:
an instruction module 901 configured to instruct a terminal to determine or not to determine whether to perform a first operation according to information of a first non-public network recorded in a report variable of a report.

In an embodiment, the first non-public network includes at least one of:
a selected non-public network of the terminal in a case that the recording of the report is triggered;
a registered non-public network of the terminal in a case that the recording of the report is triggered; and
at least one non-public network equivalent to a registered non-public network of the terminal in a case that the recording of the report is triggered.

In an embodiment, information of the registered non-public network and/or information of the at least one non-public network equivalent to the registered non-public network is determined based on a non-access stratum signaling.

In an embodiment, the instruction module is configured to instruct the terminal to determine or not to determine whether to perform the first operation according to a relationship between information of a second non-public network where the terminal is located and the information of the first non-public network.

In an embodiment, the second non-public network is a non-public network where the terminal is located in a case of determining whether to perform the first operation.

In an embodiment, instructing the terminal to determine or not to determine whether to perform the first operation according to the relationship between the information of the second non-public network where the terminal is located and the information of the first non-public network includes at least one of:
instructing the terminal to perform the first operation in a case that the information of the first non-public network includes the information of the second non-public network; or
instructing the terminal not to perform the first operation in a case that the information of the first non-public network does not include the information of the second non-public network.

In an embodiment, the instruction module is configured to instruct the terminal to clear the report variable in a case that the information of the first non-public network does not include the information of the second non-public network.

In an embodiment, the first operation includes a self-organizing network operation and/or a minimization of drive tests operation.

In an embodiment, the first operation includes at least one of: measurement; recording a measurement result; sending a measurement result availability indication to a network device; sending a measurement configuration availability indication to a network device; and sending a measurement result to a network device.

In an embodiment, the report includes at least one of: a radio link failure report; a successful handover report; a random access report; a connection establishment failure report; and a minimization of drive tests report.

In an embodiment, the first non-public network includes at least one of: a stand-alone non-public network; and a public network integrated non-public network.

In an embodiment, the information of the first non-public network includes at least one of: an identifier of the stand-alone non-public network; an identifier of the public network integrated non-public network; a network identifier; and a closed access group identifier.

For the embodiments of the apparatus, since they substantially correspond to the embodiments of the method, reference may be made to the relevant descriptions in the embodiments of the method for relevant information. The embodiments of the apparatus described above are merely illustrative, where the modules described as separate components may be or may not be physically separated, and the components shown as modules may be or may not be physical modules, i.e. they may be located in one place or distributed across a plurality of network modules. Some or all of the modules may be selected according to actual needs to achieve the objectives of the solution of these embodiments. Those skilled in the art may understand and implement it without any creative effort.

Embodiments of the present disclosure further provide an operation determination system. The operation determination system includes a terminal and a network device. The terminal is configured to implement the operation determination method according to any one of the above embodiments, and the network device is configured to implement the operation instruction method according to any one of the above embodiments.

Embodiments of the present disclosure further provide a communication apparatus. The communication apparatus includes: a processor; and a memory configured to store a computer program. When the computer program is executed by the processor, the operation determination method according to any one of the above embodiments is implemented.

Embodiments of the present disclosure further provide a communication apparatus. The communication apparatus includes: a processor; and a memory configured to store a computer program. When the computer program is executed by the processor, the operation instruction method according to any one of the above embodiments is implemented.

Embodiments of the present disclosure provide a computer-readable storage medium, for storing a computer program, and when the computer program is executed by a processor, the operation determination method according to any one of the above embodiments is implemented.

Embodiments of the present disclosure further provide a computer-readable storage medium, for storing a computer program, and when the computer program is executed by a processor, the operation instruction method according to any one of the above embodiments is implemented.

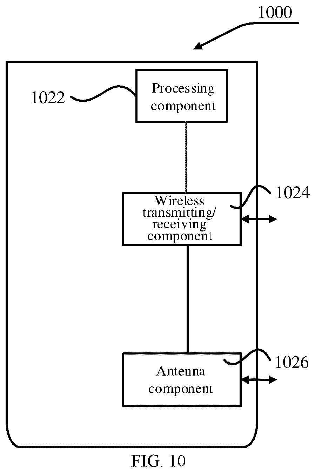

As shown in FIG. 10, FIG. 10 is a schematic block diagram illustrating an apparatus 1000 for operation instruction according to an embodiment of the present disclosure. The apparatus 1000 may be a base station. Referring to FIG. 10, the apparatus 1000 includes a processing component 1022, a wireless transmitting/receiving component 1024, an antenna component 1026, and a signal processing part specific to a wireless interface. The processing component 1022 may further include one or more processors. One of the processors in the processing component 1022 may be configured to implement the operation instruction method according to any one of the above embodiments.

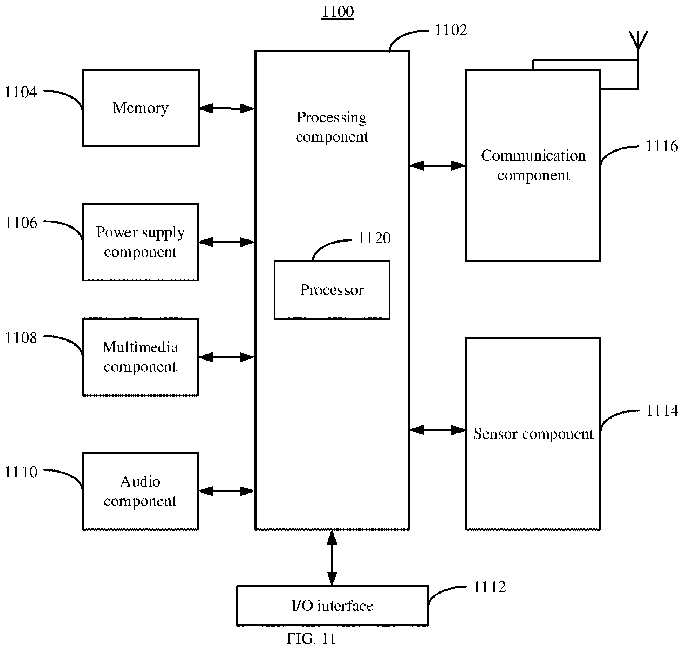

FIG. 11 is a schematic block diagram illustrating an apparatus 1100 for operation determination according to an embodiment of the present disclosure. For example, the apparatus 1100 may be a terminal, such as a mobile phone, a computer, a digital broadcasting terminal, a messaging device, a game console, a tablet device, a medical device, a fitness device, a personal digital assistant, etc.

Referring to FIG. 11, the apparatus 1100 may include one or more of the following components: a processing component 1102, a memory 1104, a power supply component 1106, a multimedia component 1108, an audio component 1110, an input/output (I/O) interface 1112, a sensor component 1114, or a communication component 1116.

The processing component 1102 typically controls the overall operation of the apparatus 1100, such as the operation associated with display, telephone call, data communication, camera operation and/or recording operation. The processing component 1102 may include one or more processors 1120 to perform instructions, so as to implement all or part of steps of the operation determination method according to any one of the above embodiments. In addition, the processing component 1102 may include one or more modules, to facilitate an interaction between the processing component 1102 and other components. For example, the processing component 1102 may include a multimedia module, to facilitate the interaction between the multimedia component 1108 and the processing component 1102.

The memory 1104 is configured to store various types of data to support the operation of the apparatus 1100. Examples of these data include interactions for any applications or methods operated on the apparatus 1100, contact data, phonebook data, messages, images, videos, etc.

The power supply component 1106 provides power to various components of the apparatus 1100. The power supply component 1106 may include a power management system, one or more power supplies, and other components associated with generating, managing, and distributing power for the apparatus 1100.

The multimedia component 1108 includes a screen providing an output interface between the apparatus 1100 and a user. In some embodiments, the screen may include a liquid crystal display (LCD) and a touch panel (TP). If the screen includes the touch panel, the screen may be implemented as a touch screen, to receive an input signal from the user.

The audio component 1110 is configured to output and/or input an audio signal. For example, the audio component 1110 includes a microphone (MIC), and the microphone is configured to receive external audio signals in a case that the apparatus 1100 is in an operation mode such as a call mode, a recording mode or a voice recognition mode. The received audio signal may be further stored in the memory 1104 or be sent via the communication component 1116. In some embodiments, the audio component 1110 further includes a speaker for outputting the audio signal.

The I/O interface 1112 provides an interface between the processing component 1102 and a peripheral interface module, and the peripheral interface module may be a keyboard, a clicking wheel, a button and the like. The button may include but is not limited to a home button, a volume button, a start button, and a lock button.

The sensor component 1114 includes one or more sensors for providing condition assessment of various aspects for the apparatus 1100.

The communication component 1116 is configured to facilitate wired or wireless communication between the apparatus 1100 and other apparatuses. The apparatus 1100 may access a wireless network based on a communication standard, such as WiFi, 2G, 3G, 4G LTE, 5G NR, or a combination thereof. In an embodiment, the communication component 1116 receives broadcast signals or broadcast-related information from an external broadcast management system through a broadcast channel. In an embodiment, the communication component 1116 also includes a near-field communication (NFC) module, to facilitate short-range communication. For example, the NFC module may be implemented based on a radio frequency identification (RFID) technology, an infrared data association (IrDA) technology, an ultra-wideband (UWB) technology, a Bluetooth (BT) technology, or other technologies.

In an embodiment, the apparatus 1100 may be implemented by one or more application-specific integrated circuits (ASIC), digital signal processors (DSP), digital signal processing devices (DSPD), programmable logic devices (PLD), field-programmable gate arrays (FPGA), controllers, microcontrollers, microprocessors, or other electronic components, for performing the operation determination method according to any one of the aforementioned embodiments.

In an embodiment, a non-transitory computer-readable storage medium including instructions is further provided, such as the memory 1104 including instructions, and the processor 1120 of the apparatus 1100 may perform the instructions to complete the operation determination method according to any one of the aforementioned embodiments. For example, the non-transitory computer-readable storage medium may be a ROM, a random access memory (RAM), a CD-ROM, a magnetic tape, a floppy disk, an optical data storage device, etc.

Other embodiments of the present disclosure will be apparent to those skilled in the art from consideration of the specification and practice of the embodiments disclosed here. The present disclosure is intended to cover any variations, uses, or adaptations of the present disclosure. These variations, usages, or adaptive changes follow the general principles of the present disclosure and include common knowledge or conventional technical means in this technical field not disclosed by the present disclosure. The specification and embodiments are merely considered to be illustrative, and the substantive scope and spirit of the present disclosure is limited only by the appended claims.

It should be understood that the present disclosure is not limited to the precise structure as described above and shown in the drawings, but may have various modifications and alternations without departing from the scope of the present disclosure. The scope of the present disclosure is limited only by the appended claims.

## Claims

1. An operation determination method, performed by a terminal and comprising:
recording information of a first non-public network into a report variable of a report, wherein the information of the first non-public network is configured to determine whether to perform a first operation.

2. The method according to claim 1, wherein the first non-public network comprises at least one of:
a selected non-public network of the terminal in a case that the recording of the report is triggered;
a registered non-public network of the terminal in a case that the recording of the report is triggered; or
at least one non-public network equivalent to a registered non-public network of the terminal in a case that the recording of the report is triggered.

3. The method according to claim 2, wherein information of the registered non-public network and/or information of the at least one non-public network equivalent to the registered non-public network is determined based on communication with a core network.

4. The method according to any one of claims 1 to 3, further comprising:
determining whether to perform the first operation according to a relationship between information of a second non-public network where the terminal is located and the information of the first non-public network.

5. The method according to claim 4, wherein the second non-public network is a non-public network where the terminal is located in a case of determining whether to perform the first operation.

6. The method according to claim 4 or 5, wherein determining whether to perform the first operation according to the relationship between the information of the second non-public network where the terminal is located and the information of the first non-public network comprises at least one of:
in a case that the information of the first non-public network includes the information of the second non-public network, determining to perform the first operation; or
in a case that the information of the first non-public network does not include the information of the second non-public network, determining not to perform the first operation.

7. The method according to any one of claims 4 to 6, further comprising:
in a case that the information of the first non-public network does not include the information of the second non-public network, clearing the report variable.

8. The method according to any one of claims 1 to 7, wherein the first operation comprises a self-organizing network operation and/or a minimization of drive tests operation.

9. The method according to any one of claims 1 to 8, wherein the first operation comprises at least one of:
measurement;
recording a measurement result;
sending an availability indication of a measurement result to a network device;
sending an availability indication of a measurement configuration to a network device; or
sending a measurement result to a network device.

10. The method according to any one of claims 1 to 9, wherein the report comprises at least one of:
a radio link failure report;
a successful handover report:
a random access report;
a connection establishment failure report; or
a minimization of drive tests report.

11. The method according to any one of claims 1 to 10, wherein the first non-public network comprises at least one of:
a stand-alone non-public network; or
a public network integrated non-public network.

12. The method according to any one of claims 1 to 11, wherein the information of the first non-public network comprises at least one of:
an identifier of a stand-alone non-public network;
an identifier of a public network integrated non-public network;
a network identifier; or
a closed access group identifier.

13. An operation instruction method, performed by a network device and comprising:
instructing a terminal to determine or not to determine whether to perform a first operation according to information of a first non-public network recorded in a report variable of a report.

14. The method according to claim 13, wherein the first non-public network comprises at least one of:
a selected non-public network of the terminal in a case that the recording of the report is triggered;
a registered non-public network of the terminal in a case that the recording of the report is triggered; or
at least one non-public network equivalent to a registered non-public network of the terminal in a case that the recording of the report is triggered.

15. The method according to claim 14, wherein information of the registered non-public network and/or information of the at least one non-public network equivalent to the registered non-public network is determined based on a non-access stratum signaling.

16. The method according to any one of claims 13 to 15, wherein instructing the terminal to determine or not to determine whether to perform the first operation according to the information of the first non-public network recorded in the report variable of the report comprises:
instructing the terminal to determine or not to determine whether to perform the first operation according to a relationship between information of a second non-public network where the terminal is located and the information of the first non-public network.

17. The method according to claim 16, wherein the second non-public network is a non-public network where the terminal is located in a case of determining whether to perform the first operation.

18. The method according to claim 16 or 17, wherein instructing the terminal to determine or not to determine whether to perform the first operation according to the relationship between the information of the second non-public network where the terminal is located and the information of the first non-public network comprises at least one of:
instructing the terminal to perform the first operation in a case that the information of the first non-public network includes the information of the second non-public network; or
instructing the terminal not to perform the first operation in a case that the information of the first non-public network does not include the information of the second non-public network.

19. The method according to any one of claims 16 to 18, further comprising:
instructing the terminal to clear the report variable in a case that the information of the first non-public network does not include the information of the second non-public network.

20. The method according to any one of claims 13 to 19, wherein the first operation comprises a self-organizing network operation and/or a minimization of drive tests operation.

21. The method according to any one of claims 13 to 20, wherein the first operation comprises at least one of:
measurement;
recording a measurement result;
sending an availability indication of a measurement result to the network device;
sending an availability indication of a measurement configuration to the network device; or
sending a measurement result to the network device.

22. The method according to any one of claims 13 to 21, wherein the report comprises at least one of:
a radio link failure report;
a successful handover report:
a random access report;
a connection establishment failure report; or
a minimization of drive tests report.

23. The method according to any one of claims 13 to 22, wherein the first non-public network comprises at least one of:
a stand-alone non-public network; or
a public network integrated non-public network.

24. The method according to any one of claims 13 to 23, wherein the information of the first non-public network comprises at least one of:
an identifier of a stand-alone non-public network;
an identifier of a public network integrated non-public network;
a network identifier; or
a closed access group identifier.

25. An operation determination apparatus, comprising:
a recording module configured to record information of a first non-public network into a report variable of a report, wherein the information of the first non-public network is configured to determine whether to perform a first operation.

26. An operation instruction apparatus, comprising:
an instruction module configured to instruct a terminal to determine or not to determine whether to perform a first operation according to an information of a first non-public network recorded in a report variable of a report.

27. An operation determination system, comprising a terminal and a network device, wherein the terminal is configured to implement the operation determination method according to any one of claims 1 to 12, and the network device is configured to implement the operation instruction method according to any one of claims 13 to 24.

28. A communication apparatus, comprising:
a processor; and
a memory configured to store a computer program,
wherein when the computer program is executed by the processor, the operation determination method according to any one of claims 1 to 12 is implemented.

29. A communication apparatus, comprising:
a processor; and
a memory configured to store a computer program,
wherein when the computer program is executed by the processor, the operation instruction method according to any one of claims 13 to 24 is implemented.

30. A computer-readable storage medium for storing a computer program, wherein when the computer program is executed by a processor, the operation determination method according to any one of claims 1 to 12 is implemented.

31. A computer-readable storage medium for storing a computer program, wherein when the computer program is executed by a processor, the operation instruction method according to any one of claims 13 to 24 is implemented.
